# EUROPEAN PATENT SPECIFICATION

(11) **EP 1 943 612 B1**
(45) Date of publication and mention of the grant of the patent: **20.05.2009**
(21) Application number: 07819225.9
(22) Date of filing: 16.10.2007
(51) Int. Cl.: G06K 9/00, G08B 21/22, G08B 13/194

(54) **VIDEO IMAGE TRACK SUPERVISION SYSTEM**
VIDEOBILD-GLEISÜBERWACHUNGSSYSTEM
SYSTEME DE SURVEILLANCE DE VOIES UTILISANT DES IMAGES VIDEO

(30) Priority: 16.10.2006 EP 06090191
(43) Date of publication of application: 16.07.2008
(73) Proprietor: Schütte, Jörg, 01187 Dresden (DE); Scholz, Sven, 01159 Dresden (DE)
(72) Inventor: Schütte, Jörg, 01187 Dresden (DE); Scholz, Sven, 01159 Dresden (DE)
(74) Representative: Hertin, Paul W.
(86) International application number: PCT/EP2007/009162
(87) International publication number: WO 2008/046662

(56) References cited:
- EP-A- 1 522 982
- FR-A- 2 606 572
- BOGHOSSIAN B ET AL: "PRISMATICA: Toward Ambient Intelligence in Public Transport Environments" IEEE TRANSACTIONS ON SYSTEMS, MAN AND CYBERNETICS. PART A: SYSTEMS AND HUMANS, IEEE SERVICE CENTER, PISCATAWAY, NJ, US, vol. 35, no. 1, January 2005 (2005-01), pages 164-182, XP011123560 ISSN: 1083-4427
- SACCHI C ET AL: "USE OF NEURAL NETWORKS FOR BEHAVIOUR UNDERSTANDING IN RAILWAY TRANSPORT MONITORING APPLICATIONS" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 541-544, XP001066791 ISBN: 0-7803-6725-1

## Description

### Background of the invention

The invention relates to a method, a system and a computer program product for supervising danger zones, especially platforms and tracks in stations.

In public places are areas that have to be monitored in order to prevent accidents. Especially the platform edges in stations represent danger zones with about 1 to 5 passenger incidents per year per line, whereas 80 % are supposed to be suicides.

Besides the physical separation of the track from the public by barriers, different surveillance systems for danger areas are known from the state of art. Basically three different methods for platform protection are known:
(a) The manual supervision by the driver or a security staff.
(b) Automatic systems like video image based detection systems.
(c) A combination of manual and automatic systems like the use of different cameras in combination with personal which is continuously evaluating the pictures in addition to automatic systems.

The manual supervision of observing danger areas is directly linked to the attention of the persons watching the monitor and deciding if a dangerous situation is given. Consequently, a high error rate is given. Furthermore this method is very expensive as enough personal has to be employed in order to guarantee safety.

There are also several automatic systems known from the state of the art, that are working totally independent from any personnel. These systems can be divided in active and passive systems depending on the technology used. The video image analysis resembles a passive technology as the reaction to a critical situation is not a direct consequence of the video image recording. In contrast the use of optical, electromagnetic or touch sensors has to be classified as active technology as the event directly leads to a reaction:

Critical factors of these systems are the sensitivity of detection and the threshold of detection defining dangerous situations. On hand it has to be guaranteed that every dangerous situation is reliable detected, but on the other hand only real dangerous situation should lead to the interruption of traffic and stop trains for example before reaching hazardous objects or injuring persons. The active technologies need regular functional checks for the used sensors, making these systems very expensive.

The EP 0 246 085 B1 discloses a surveillance system comprising image pick-up means and an image processing unit for detecting scene changes. The system of the EP 0 246 085 B1 is characterized by a noise signal generator and means for superimposing a noise signal on the video signal to as a quasi-scene change information. The system of this document simply compares to video signals for changes. It is not possible to define dimensions for objects or persons to be detected.

The DE 44 30016 C2 disposes an image evaluation system wherein a differential image which is obtained from a digitized video signal from a surveillance camera and in which varying pixels are marked is investigated for contiguous objects by means of an object extractor. A zone dependent message is emitted by evaluating given relevance criteria which are dependent on the variation in the position of the objects relative to predetermined images areas of different degrees of relevance for the message. The disclosed system is strictly dependent from the stored predetermined objects that are used to generate a message. If unknown objects appear on the image it is not possible to generate a message.

The DE 33 16 122 A1 discloses a open-air surveillance system where the problems of evaluating grey-images are solved by defining least three control strips, which are aligned parallel to one another and each of which has a different grey value and that the illuminators and television cameras which are assigned to one and the same region of ground strip are supported several metres above the control strip. This system is more complex as special illuminators are necessary increasing the possible error sources.

The DE 196 21 612 C2 discloses a device for monitoring tracks using stereo-pairs of cameras. The images of different pairs of cameras are compared with a reference picture to detect objects or persons. One major disadvantage of any system using stereo-pair camera generated images is that the adjustment of the two cameras forming a stereo-pair is critical. These systems are not suitable for automatically monitoring danger areas and lead very often to false alarm.

The WO 01/17838 A1 discloses a method for monitoring a danger area, whereby a picture recording device monitors objects that are at risk and/or dangerous. The danger area is situated in the recorded area. The danger area can be detected by means of said picture recording device. The detected picture of the danger area is dispersed into a plurality of pixels which are digitally stored as a real model and are compared to the pixels of the desired model of the danger area without objects that are at risk and/or dangerous, whereby said desired model has been detected and stored before. A signal, preferably a warning signal, is generated when the pixels of the two models differ. This method is also dependent on predetermined objects that are thought to be a risk or dangerous. Unknown objects will not be detected by this method.

It has to be stated that the known difference picture methods classifying scenes with a neural network are only suitable for the detection of moving objects.

Coming from this state of the art it is an aim of the present invention to provide improved means for a reliable and false alarm free detection of obstacles, persons or disturbances that have to be classified as hazardous.

The aim of the invention is solved by the characteristics of the independent claims.

### Brief summary of the invention

The present invention provides a method for the surveillance of danger zones, especially platforms in stations, that is based on a specific detection geometry dividing the supervision area in pairs of trapeziums, furtheron termed trapezes, using one trapeze for detection and the other trapeze for qualification of detections. The detection geometry is combined with sensitive detection and qualification steps based on video image analysis. A major advantage of the present invention is the continuous scalability of the detection threshold.

A further aspect of the present invention is a system for the detection of objects or persons preferable in metro track areas between platform edges and tunnel walls or other civil structures. Once an object is detected, an alarm is transmitted to the Automatic Train Control System (ATC) or the Interlocking to stop a moving train. Objects or persons shall have a minimum dimension or weight to be detected. It is an advantage of the present invention that the size or weight of obstacles or persons can be adjusted and therefore be smaller than a defined threshold value, for example according to to VDV 399 defining a sphere of 30 cm in diameter or a weight of 10 kg. Consequently an adaptation to different settings is possible in order to suppress a false alarm. Reason for this requirement is the observation, that whatever the detection mechanism may be, unjustified alarms may be triggered if the resolution requirement is too sensitive due to possible disturbances or statistical fluctuations.

Finally a computer program product is an aspect of the present invention that causes a computer to conduct a method according to the invention. A central part of this computer program product is a so-called safety-kernel defining the essential steps necessary to perform the method according to the invention.

The safety paradigm of the Safety Kernel of the present invention is based on logical constraints in the context of the supervised area and different operational scenarios:
1) Objects shall be detected only if they move from the platform into the train's clearance profile area.
   Justification:
   - In automated operations of metro systems, persons or dangerous objects may be brought into the clearance profile of a moving train from the platform edge. Objects or persons that need to be protected are passengers or objects (wheel chairs, shopping carts etc.) that may fall unintended or move unconsciously from the passenger accessible area (platform) over the platform area into the track area. This target scenario excludes objects/persons coming from the tunnel entry. Persons/objects entering from the tunnel entrance/exit area must have been accessed to the tunnel from any other passenger accessible area that should be protected accordingly.
   - In case of other passenger accessible areas (e.g. galleries above the tracks, open fields opposite to the platform area next to tracks), warning or supervision sectors need to be added.
2) Only moving objects from the platform edge into the train's clearance profile shall be detected.
   Justification:
   - In general, the unintruded clearance profile and its physical characteristics are static of nature. The unintruded clearance profile shall not be detected as object/person alarm. Therefore variations of the physical characteristics of the train's clearance profile change only very slowly in time and within predefined limits to avoid misinterpretations. In our video image processing approach, this means that background illumination levels changing the image of the track shall not occur rapidly and will remain within grey value boundaries.
   - Complementary to this upper constraint moving objects/persons change relatively quickly, due to a basically different dynamic behaviour, and outside the tolerance boundaries the physical characteristics of the clearance profile. Objects/persons to be detected shall change relatively quickly the image of the otherwise undisturbed train's clearance profile.
   - An object/person cannot obstruct the train's clearance profile if it has not been brought into the profile before. Bringing it into the profile over a certain limited time, means, that the object/person must have a minimum speed, it cannot be static.
   - The speed limits that are imposed by the detection principle can be derived from the FMECA. An extremity of a person being stretched into the clearance profile from the platform must be brought in during at least the time between a train departure and the arrival of the following train. Once moved over the platform edge and moving into the track, the object/person need necessarily to fall or climb. Both motions generate a minimum speed. It can not happen with static characteristics.
3) A supervision sector of a horizontal dimension of approximately 1.1 m from the platform edge towards the track middle axis is the critical (and sufficient) supervision sector.
   Justification:
   - Persons/Objects moving from the platform, in accordance with the assumption laid out in paragraph 2), into the clearance profile of the moving train cannot appear at the platform edge and instantaneously bridge a distance of more than 1 m, unless it moves with infinitely high speed (which is not possible anyway). The maximum speed of an object/person to be detected can be derived from physical considerations of person/object kinematics, the geometry of the platform and forces active on the object/person. Taking into account typical parameters, speeds bridging more than 1.1 m within the 80 s image rate time is physically not possible.

The patent is hereafter described by the working example, wherein the patent is not restricted to the working example. Thereby, showing:
- **Fig. 1**: Camera Mounting and Supervision Area
- **Fig. 2**: Typical trapeze sector geometry of one camera
- **Fig.3**: Sub-Matrix Grey Value Differences Statistical Distributions
- **Fig. 4**: Overall UML notified Process Diagram
- **Fig. 5**: Critical Object in Supervised Area
- **Fig 6.**: Train at Station Platform identification.
- **Fig. 7**: Trapeze Sector Geometry and Supervision Area near the Platform Edge
- **Fig. 8**: Quantization error of real and measured object size (comparison of discrete sensor beams with 15 cm steps vs. number of activated sub-matrices inside an image).

The Safety Kernel of the video based GIDS (Guideway Intrusion Detection System) solution according to the present invention is based on a grabbed b/w-image of a part of the track area supervised by one camera. A camera supervises approx. 35 m depending on the resolution requirements (the detection threshold of 30 cm in diameter needs well to be detected with respective resolution). In general, all camera parameters as well as the mounting is fixed, no automatic, dynamic changes or variations of the parameters are accepted in order to achieve the safety requirements.

For certain applications within in a more .dynamic environment (e.g. regular day and wight on open air stations) different camera parameter sets can be used which are predefined based on previously observed environmental conditions. These parameter settings can then be chosen with respect to the exact conditions (e.g. illumination levels). The change between those pre-defined sets of camera parameters will be performed and supervised by qualified personnel in order to assure camera settings which are sufficient for correct detection. Although different settings can be used, these settings itself must then be considered static as well. The supervision of illumination levels is performed by the system itself, triggering a respective warning message in order to inform the user in case of an insufficient environmental conditions. Regarding the safety requirements this procedure always guarantees a system reaction to the safe side.

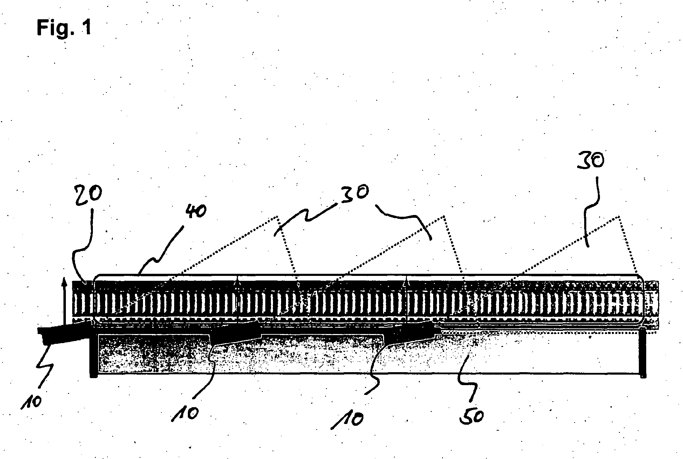

Cameras are mounted along the track/platform in equidistance (see fig. 1), producing each a geometrically similar image of different supervision areas along the platform track. The front of a standing train characterizes however one extremity section in front of the camera. The train appearing at the end of the supervision area (approx. distance of 35 m) characterizes the other extremity. The transversal position of the cameras with respect to the track can be chosen from the maximum left (e.g. tunnel wall) up to the maximum right (platform edge) side. By using this camera positioning configuration the camera setting and parameters will vary only slightly. Hence, a modular configuration (camera mounting height, camera viewing angles and perspective) is set up as a combination of several cameras. Typically, three cameras are sufficient to cover one complete platform track area for one regular train travel direction. In case of bidirectional regular traffic a set of additional cameras can be mounted in the opposite direction.

### Detection Geometry

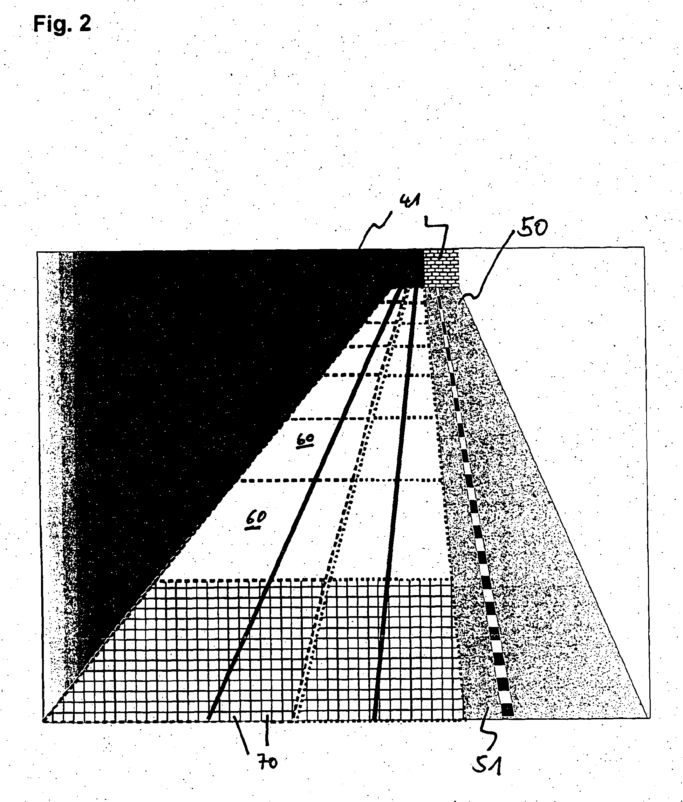

Figure 2 shows that a supervision section is geometrically divided into trapezes, each extending typically in lateral dimension (horizontal) over the complete track area (e.g. from platform edge to tunnel wall) and longitudinally (e.g. in the direction of the rails or the moving train). The longitudinal extension of the trapezes is determined by the required detection accuracy in front of the moving train (e.g. 5 m) which means that objects or persons shall be detected if they are more than 5 m in front of the moving train. According to the referred recommendation VDV 399 (cf. Purpose of the Device), an object or person (e.g. intentionally) falling just 2 m in front of the moving train does not necessarily have to be detected reliably. Reason for this tolerance interval is that any detection system needs to detect the train as harmless system element. Detection limits which are set too narrow around the moving train result in any detection system to unjustified alarms.

The trapeze zones are in turn subdivided each into approximately areal symmetric left and right trapezes parts, where one of the trapezes (either the left or the right) represents the actual detection or supervision sectors and the other trapeze represents a qualification trapeze in which implausible illuminations or objects or regular and acceptable objects (moving train, train standing at station) are qualified.

Additional warning sectors along the platform edge as additional trapezes can be added easily (cf. Platform Edge Supervision). The approximately equivalent areal size of the left and right trapezes' parts can be altered if required by the environment or illumination but a detection width of the supervision sector of at least 1 m is required to safely capture all potentially dangerous situations. The size and layout of the trapezes can also be adapted according to the perspective distortion imposed by the exact camera position (roll-, pitch- and yaw-angle) relative to the supervised area in the real world.

### Image Pre-processing and Detection Sensitivity

Transportation signalling safety paradigms require typically, fail-safe designs and quantitatively evaluated safety characteristics: Although the platform protection and guideway intrusion is of the lowest of typical Safety Integrity Levels as required by the governing standards, similar design rules and paradigms had been deployed during the development of the algorithms (see also below "Safety Considerations").

Since the GIDS/Platform Protection Device is in fact an On-Demand-System it has to supervise permanently the supervision area until it may be solicited by a potentially hazardous situation. This translates into a very small time ratio of actively and justified detection time of an object/person in the track area and the time of monitoring the supervision area without hazardous situations, however with sources of potential disturbances such as moving trains, thrown in uncritical objects (e.g. bottles), environmental effects etc.. As argued above, critical objects/persons are furthermore anticipated to intrude/fall/move from passenger accessible areas with a non-zero speed value.

A first and relatively simple pre-processing step was retained for the Safety Kernel, a Difference Image Pre-Processing. This analysis step takes simply the accumulated grey value of certain parts of the supervised area (in the whole image matrix) at an actual time To and subtracts the grey value of the same image processed at a time T₀+Δt (currently the following image), where Δt is a comparatively small time of approx. 80 to 100 ms (compared to physical motions of real objects).

By this pre-processing analysis step, only those parts of the image that change their optical characteristics in the course of time are retained, thus increasing the sensitivity for detection of possible objects/persons in the supervision area. Compared to other installed GIDS solutions that require a certain electromagnetic reflection characteristic (RADAR) or a certain level of impermeability for optical or infrared lights, the assumption of the proposed Video Analysis approach is reduced to the basic artefact, that physical objects after the optical environment of an area with a minimum of optical radiation present. By reducing the object attributes to this extreme minimum requirement, an adequately sensitive analysis method has to be configured and awareness for multiple disturbance sources (unjustified alarms) needs to be taken into account (any air fluctuation, piece of paper, rejection),

In order to increase in a quantitatively measurable manner the sensitivity towards optic changes by an object, pixel grey value changes had been grouped into specific sub-matrices of N-by-N pixels After experimentation of a larger variation of matrix lengths N the analysis showed that the results remain insensitive to stochastic changes above 5 pixels. Due to geometric gauging, an image sub-matrix of 7-by-7 pixels had been retained, grouping 49 pixels in a sub-matrix. The associated size of this sub-matrix is well below the detection threshold of 30 cm in all cases (e.g. in the extreme case of the most remote trapeze) so the geometrical resolution is sufficient in all geometries.

Before and after the grey value image differentiation, the average grey values of the sub-matrices are calculated and subtracted. This process step has two effects (compared to direct pixel by pixel differentiation). It reduces disturbing sensitivity to system artefacts (not in conjunction with the supervision area and objects themselves, e.g. thermo dynamical or other statistical fluctuations of one single pixel) and increases the statistical significance and sensitivity of "real" object of supervision area bound optical changes by orders of magnitude.

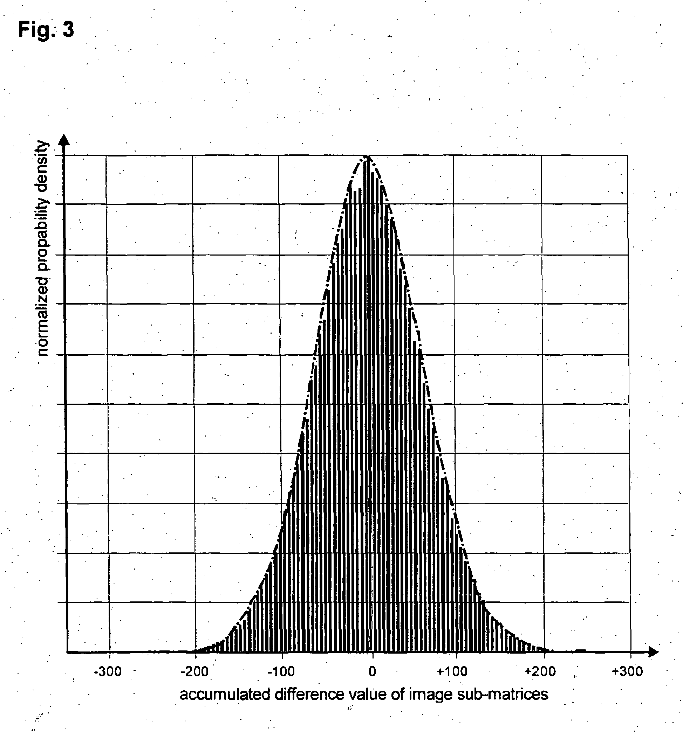

Figure 3 indicates the sub-matrices' differences distribution of images of the unintruded supervision area. The distribution follows approximately narrow Gaussian Distributions and is separated by 5 to 6 sigma values from the distribution of differences caused by real object This statistical analysis means, that the probability of confusing any object brought into the supervision area of sub-matrix (or below) size with background ("not seeing it") can be quantified to a value below 10⁻⁵ and is further reduced by appearing in groups of connected sub-matrices and the high time repetition rates of the analysis.

It shall be noted, that the cut parameter below which the Sub-matrix Grey Value Difference is interpreted as background fluctuations of an undisturbed or unchanged image is currently set to about 5 sigma which yields a 100% detection of all object grey value distributions that had been tested even at weak illumination levels of the track area. It shall further be noted, that this selected Pre-processing step can be considered fail safe, because almost all effects of failing equipments or polluting effects fall onto the safe side of activating sub-matrices.

After the image pre-processing step which triggers the system's attention to a possible intrusion with this high statistical confidence, the difference image method comparing two consecutive images is combined with a reference image method comparing the last image (without intrusion by an object) with all following images (typically up to 4 images). The same technique to compare sub-matrices in two images will produce significant changes between this short-term static reference image and all sequencing images. By combining these procedures a sufficiently high detection accuracy is achieved. In order to eventually trigger an alarm a group of a certain number of active sub-matrices is required for a positive detection of a critical object. A certain number n of sub-matrices out of m sub-matrices must be activated. The required number n of activated sub-matrices is determined through the user-defined critical size of objects, the typical back-ground noise level and the desired detection accuracy.

The continuous scalability of this detection threshold is a new characteristic compared to any other existing technology for Guideway Intrusion Detection, making use of discrete measurement point e.g. beams of infra-red light or RADAR/LASER waves mounted with a discrete distance of 15 cm along the track. The desired critical threshold value can easily be scaled to the needs of the user, taking into account to the smallest people, who shall be detected. The video based GIDS solution performs a continuous size estimation, which is then compared to predefined parameter sets of the critical size of objects. These parameter sets can easily be modified and require neither software nor hardware modifications.

### Detection and Qualification Functional Sequences.

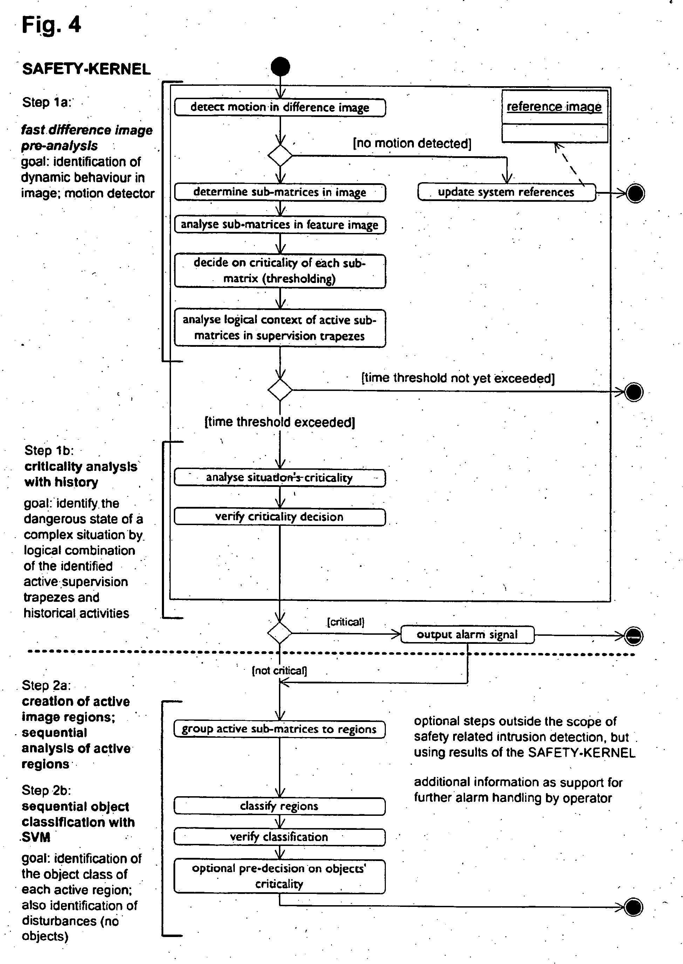

As discussed above, the device employs an extremely sensitive and quantifiable detection pre-processing analysis that no real object, no matter what grey value distribution it has, may be missed. On the other hand, the extreme sensitivity of the algorithm tends to indicate the smallest changes in the grey value distributions of any sub-matrix in the supervised area, e.g. regularly moving trains or smaller pieces of paper illuminated differently by the moving train's headlights would indicate a sub-matrix as over the threshold ("ticked" or "activated" sub-matrix). Further criteria are developed to differentiate between anticipated uncritical activation of sub-matrices, or group of sub-matrices, and critical sub-matrices. From the overall Video Image based GIDS/Platform Protection that has been developed and tested (shown in fig. 4 as UML flowchart) the Safety Kernel uses only that subset of qualifying further considerations, that are extraordinarily simple in logic and nature and do not require any larger SW packages (like object classification or simple grey value feature comparisons by Neural Networks or Support Vector Machines).

This restricted set of verifiable image features considers the trapeze geometry of the supervised area and only a reduced number of dependable artefacts of the passenger exchange process at platforms.

First, the perspective, distance and trapeze number is considered to define a trapeze dependent minimum size of critical objects/persons in terms of active sub-matrices. While an object of e.g. 15 cm in dimension or diameter would be represented by an area of e.g. 12 sub-matrices in the first trapeze (counted from the camera position, so the trapeze closest to the camera), it would be represented by only two in the last trapeze (counted in distance from the camera position). Conservative lower limits can be defined to account also for potentially smaller objects without increasing the unjustified alarms rate due to polluting items.

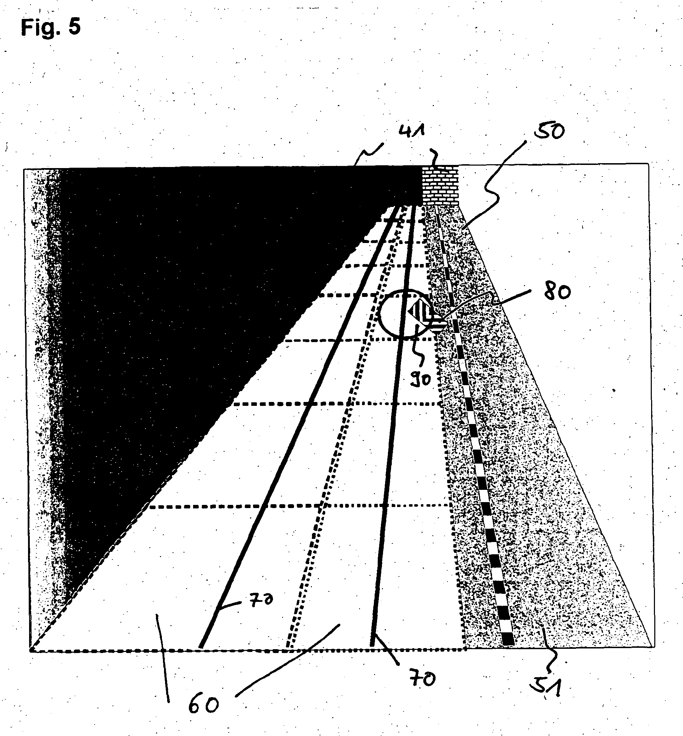

Due to the configuration of passenger accessible areas, the right side trapezes in a typical metro station is scrutinized permanently for possible objects brought into the track area, activating a connected minimum number of sub-matrices (see Fig. 5).

As with all other known GIDS methodologies, also moving trains appear as "intruding objects" that need to be identified reliably. In our case of extremely sensitive video image analysis, a moving train is revealed by a very large number of activated sub-matrices. Since an equivalent number of activated sub-matrices origins either from equipment failure or an object of relatively, very large scale, typically of a least comparable size of 10 m-by-1 0 m, these appearances can be excluded from representing critical objects since there is in most metro systems no other object of this size (except the trains) finding access to the platforms. Other artefacts like failing equipments or environmental, disturbances (e.g. bugs over camera lens) are revealed by other mechanisms described further below.

Upon detection of at least a critical number of activated sub-matrices in the right trapezes, the device's algorithms check also the left trapezes for a certain number of activated sub-matrices. If left trapezes contain also a higher number of activated sub-matrices the hypothesis of a moving train is established and the activated sub-matrices in the right supervision area are interpreted as part of the moving train.

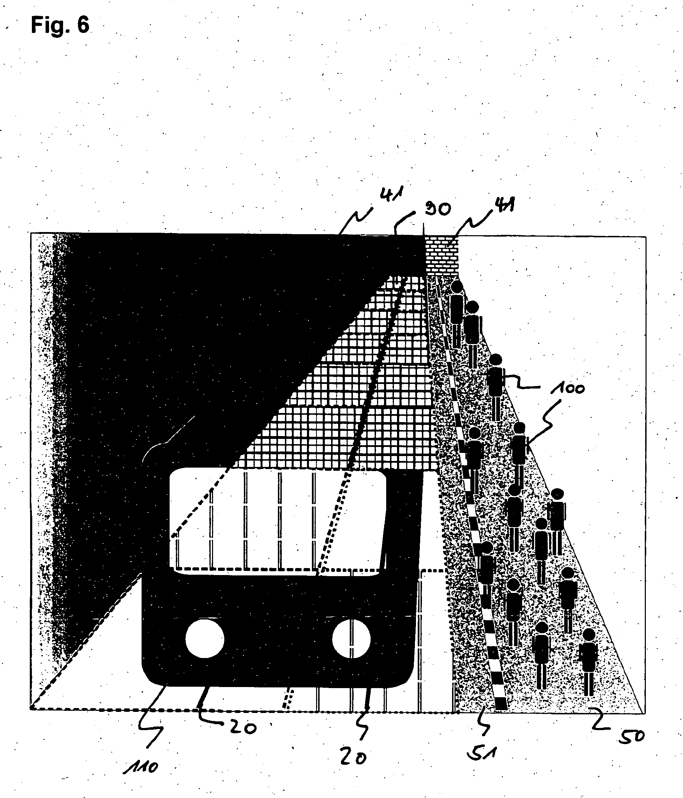

In the event of a train standing at a station, an driver boarding the trains or other movements could unjustified activate a critical number of sub-matrices on the right supervision sector, while the train itself does not activate any sub-matrices between two identical images from time To and T₀+Δt (subtraction of identical images). Therefore, the algorithm checks also the sub-matrix based differences between the actual image and a relatively recent Background Reference Image (BRI). The Background Reference Image is collected typically every minute (or few minutes). Against the BRI, the almost complete number of station area sub-matrices is activated, which is then interpreted as a *Train At Station* (TAS) status (see Fig. 6).

Both the TAS and BRI are, used as basic system health and safety check instruments at the same time. Most safety critical system failures or circumstances can be revealed after a relatively short time (e.g. some minutes) by counting, requesting and checking for regular system activities. Firstly, an alternating sequence of Trains at Station Platforms (TAS) and undisturbed images, representing the empty track, is requested. Secondly, a regular update of the Background Reference Image, accepted within smaller global grey value limits and without any activated sub-matrices compared to the last BRI (of the empty station track), is expected. This simple methodology allows also to account for smaller changes in the overall lighting/illumination situation and accepting e.g. parts of a newspaper dragged into the track after an moving train as parts of the background. This feature could also be switched off if too dirty environment, since not required for the system functions accomplishment.

Long term statistics at multiple metro systems in Europe have shown that the Safety Kernel works as expected and falls on the safe side in case of any unexpected circumstances or failures. It further benefits in comparison to other approaches to a supervision of the complete three dimensional clearance profile (e.g. the edge of the platform) and is thus not limited to the pure track/ground supervision. In this respect, a major advantage can be considered the realistic representation of persons in an image of the track. Due to a continuous supervision of the station track based on the evaluation of the track image the size of the object can be estimated with much higher accuracy. Falling people will always appear with their full front view inside an image. A fully horizontal motion of people into the track area is unlikely to happen. In contrast to other GIDS approaches the video based solution does not only detect the horizontal sectional plane of people (e.g. the diameter of two legs) but estimate the real size (area) of an object (just like a train driver would).

In order to reduce unjustified alarms (and increase operational availability), more sophisticated object classification methods had been developed outside of the Safety Kernel. These methods include edge detections, scaling and normalization of objects, training of Neural Networks to the specific object classes, dynamic behaviours or objects over the course of time (e.g. lighter newspapers floating over the platform edge in contrast to a physically heavy object falling over the platform edge into the track), absolute grey value object class differentiations with training of a Support Vector Machine, platform strip supervision and warning announcements and the like.

The device is part of the ATC and subject to safety requirements. SIL 1 is currently suggested by some specifications. By requiring SIL1, the equipment becomes part of the ATC equipment, protecting the operation of metre trains with traditionally, extremely high railway signalling safety levels. According the European Safety Standard EN 50 129, SIL1 is the Safety Integrity Level of safety equipments, that may not fail wrong side with a residual rate of more often than 10⁻⁶/h. It shall be noted, however, that according the CENELEC standards, SILs apply in general to the signalling concept of statistical failure (e.g. a permanently required inductive supervision sensor fails such that it signals the presence of certain conditions although not fulfilled). Also, the concept of SILs excludes today per CENELEC standards explicitly On-Demand-Functions but rather refers to Continuously Active Functions with a clearly defined in general binary state objective (e.g. Signal Aspect Green, Red or Yellow at any one time with small headway of trains). The Safety Kernel of our GIDS solution is active continuously, however solicited only occasionally (person in track) so any GIDS system becomes a mixture of a permanently required function that needs to function on the safe side if demanded (On Demand means a person/object moves into the track area). Since the SIL defining norms would not suggest a SIL for a GIDS protection system, the SIL concept needs therefore adequate interpretation and an associated risk analysis that quantifies more clearly the Safety Target since.

For the Video Based GIDS solution Safety Kernel, the subsequent steps are suggested in full compliance with the CENELEC Standards for this analysis:
- Confirmation of the Quantitative Safety Requirement Level (quantitative safety integrity requirement) by a Hazards Analysis and Risk Analysis for the Platform Edge Hazard. This Analysis includes a Context Fault Tree Analysis, Event Tree Analysis, Consequence and Severity Analysis and Requirement Allocation according the VDV accepted IEC 61508 and EN 50 126 / 129 standards.
- Definition of the Maximum Wrong Side Residual Failure Rates
- UML Aggregations of the System HW/SW and Functional Model
- Performance of HW/SW/System Functions FMECA and Fault Trees
- Establishment of System Critical FMECA and Risk Coverage
- Verification and Validation of the Safety Kernel SW
- HW Verification and Validation
- System Validation according to defined Safety Rules
- Quantification Estimate of Residual Effects

The sum of the Safety Analyses represents the Technical Safety Report including - Case according CENELEC 50126.

### Platform Edge Supervision in Conjunction with Track Supervision

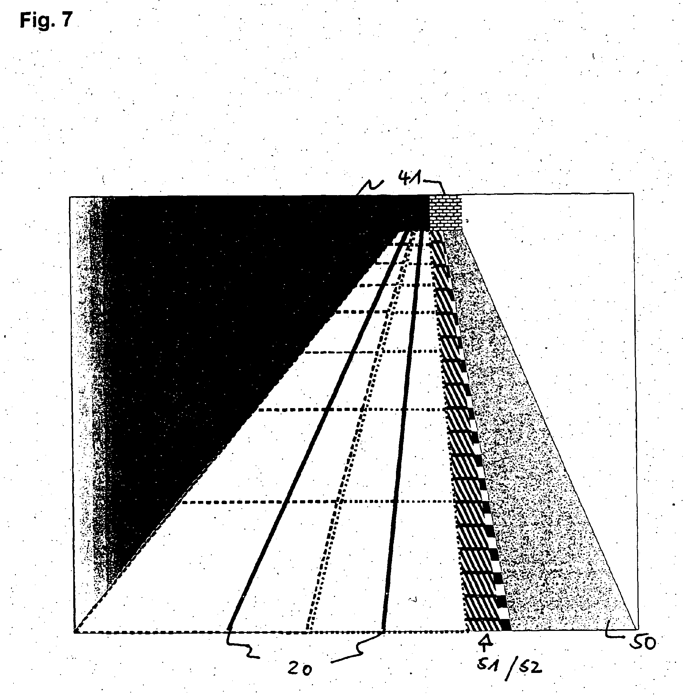

People standing to close the platform edge although not falling/moving into the track area must be considered another major problem in metro operation. Passengers standing to close to the platform edge can be hit by approaching trains, causing serious injury. Complementary to the track supervision, the platform edge area (e.g. a 50 cm wide strip, cf. Fig. 7) can also be supervised with the described Safety-Kernel method used for object detection inside the track.

For the platform strip supervision the safety requirements can be considered less rigid than for the track supervision. Whereas, people fallen onto the track shall be detected after some hundred milliseconds (e.g. 200-300 ms), this requirement does not seem necessary for the platform edge. People who have fallen onto the track might not be able to rescue themselves, either because of serious injury due to the fall or the inability to climb out of the track due to a high platform. Fast response time especially in case of approaching trains with respect to the braking distance is required in this case. On the contrary, people standing to close to the platform edge can easily step back (in case of approaching trains) or even be pulled back by other passengers. Therefore, a longer response time can be accepted.

The trapeze sectors on the platform edge are also divided into n-by-n image sub-matrices. Once on intrusion of the platform was observed with the pre-processing step of the difference image comparison, the following .images will be compared with the last image representing the empty platform strip. In contrast to the track supervision, this comparison is repeated over a longer series of images (e.g. 10 to 15 images, corresponding to approx. 1 to 1.5 seconds). This has an availability increasing effect, suppressing a warning message if people only walk through the supervision strip without staying in it for a longer time.

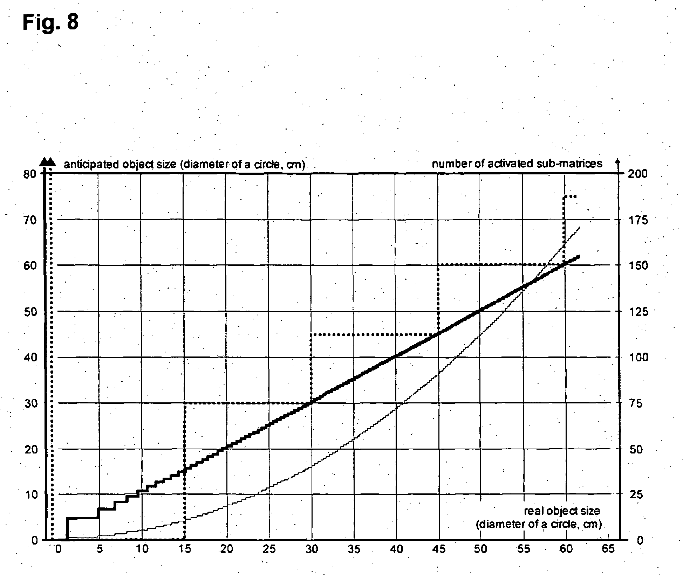

Fig. 8 shows the measured size of an object equivalent to a sphere (or a circle) which is 30 cm in diameter with the video based Guideway Intrusion Detection System in comparison to a classical system based on infrared or RADAR beams mounted horizontally over the track. The measurement accuracy differs basically as the beam system usually only measures an object's size in discrete steps of e.g. 15 cm. Whereas, the number of activated sub-matrices of the video based Guideway Intrusion Detection System inside an image grows proportionally to the objects size with negligible differences between true and measured size.

## Claims

1. Method for supervising danger zones, using at least one video camera to capture images from a supervision area comprising a platform and a track in a station, wherein the images are provided at an interface for processing, **characterized by** using a geometrical division of the supervision area into trapeziums, each extending in a lateral dimension over the complete track area and longitudinally in the direction of the rails and by the subdivision of each trapezium into each approximately area symmetric left and right trapezium parts, wherein one of the trapezium parts represent the actual detection or supervision sector area and the other trapezium part represents a qualification trapezium to qualify implausible illuminations or objects or regular and acceptable object, and comprising the following procedural steps:
a) a pre-processing step triggering the system's attention to a possible intrusion by retaining only those parts of the image that change their optical characteristics, by dividing the trapeziums in the supervision area into sub-matrices, wherein motion in the sub-matrices is detected by Difference Image Processing depending on the relevant detection threshold, and in case that motion is detected in at least a critical number of activated sub-matrices with a supervision trapezium part, depending on another detection threshold, the criticality context in the corresponding supervision trapezium part is determined by comparing the number of activated sub-matrices in the respective left and right trapezium parts, namely the supervision and qualification trapezium parts, followed by
b) an analysis step, wherein the identified active supervision trapezium parts are logically combined with historical activities in the respective trapezium part to identify a dangerous state, where
c) in parallel to steps 1 a) and 1 b) a complementary system safety check is permanently performed that is controlling the state in the supervision area is permanently by counting, requesting arid checking regular system activities.

2. Method of claim 1, **characterized in that** if after step 1 b) an analysis step is performed, wherein active sub-matrices are grouped to regions followed by classification and verification of the regions and an optional pre-decision on objects criticality.

3. Method of one of claims 1 or 2, **characterized in that** in step 1 a) motion in the sub-matrices is detected by a difference image, a background reference image or a combination thereof, wherein a difference image analysis is followed by a background reference image check.

4. Method of one of the preceding claims, **characterized in that** in step 1 a) a difference image is produced by subtracting the accumulated grey values of certain image areas at time points T₀ and T₀ +Δt, and that the average grey values of the sub-matrices before and after the grey value differentiation are calculated and subtracted.

5. Method according to claim 4, **characterized in that** At is a time of maximal 100 ms.

6. Method of one of the preceding claims, **characterized in that** in the system safety check in step 1 c) the difference between a background reference image, BRI, that has to be regularly updated, with each image is regularly determined to check for a train at station, TAS, state.

7. Method of claim 6, **characterized in that** between two consecutive BRIs smaller global grey value changes without any activated sub-matrix are accepted as not critical.

8. Method of one of claims 3 to 7, **characterized in that** in step 1 a) a reference image is produced by using the last image without intrusion.

9. Method of claim 8, **characterized in that** in step 1 a) the last image without intrusion is compared with up to four following images.

10. Method of one of the preceding claims, **characterized in that** in step 1 a) sub-matrices changing their optical characteristics are determined in the course of time to define active sub-matrices.

11. Method of one of the preceding claims, **characterized in that** in step 1 a) active sub-matrices are analysed in a feature images.

12. Method of one of the preceding claims, **characterized in that** in step 1 a) each sub-matrix is compared with a predefined threshold to decide on the activation of the sub-matrix.

13. Method of one of the preceding claims, **characterized in that** in step 1 a) the logical context of active sub-matrices in the supervision area is analysed.

14. Method of one of the preceding claims, **characterized in that** a decision step follows step 1 c), wherein in case of a critical situation a signal is generated.

15. Method of one of the preceding claims, **characterized in that** additional warning sectors along the platform edge as additional trapezium area are added.

16. Method of one of the preceding claims, **characterized in that** in case of the use of more than one camera, the cameras are placed in equidistance along the platform.

17. Method of one of the preceding claims, **characterized in that** the detection threshold is continuously salable.

18. Method of one of the preceding claims, **characterized in that** a sub-matrix comprises N-by-N pixel.

19. Method of claim 18, **characterized in that** N has at least the value 5, preferably 7.

20. Method of one of the preceding claims, **characterized in that** for generating an alarm signal a defined number n of sub-matrices out of a group comprising m sub-matrices must be activated.

21. System for supervising danger zones, using at least one video camera to capture images from a supervision area comprising a platform and a tracks in a station, wherein the images are provided at an interface for processing, **characterized by** using a geometrical division of the supervision area into trapeziums, each extending in a lateral dimension over the complete track area and longitudinally in the direction of the rails and by the subdivision of each a trapezium into approximately area symmetric left and right trapezium parts, wherein one of the trapezium parts represent the actual detection or supervision sector and the other trapezium part represents a qualification trapezium to qualify implausible illuminations or objects or regular and acceptable objects, comprising means for performing
a) a pre-processing step triggering the system's attention to a possible intrusion by retaining only those parts of the image that change their optical characteristics, by dividing the trapeziums in the supervision area into sub-matrices, wherein motion in the sub-matrices is detected by Difference Image Processing depending on the relevant detection threshold, and in case that motion is detected in at least a critical number of activated sub-matrices within a supervision trapezium part, depending on another detection threshold, the criticality context in the corresponding supervision trapezium part is determined by comparing the number of activated sub-matrices in the respective left and right trapezium parts, namely the supervision and qualification trapezium parts, following by
b) an analysis step, wherein the identified active supervision trapezium parts are logically combined with historical activities in the respective trapezium part to identify a dangerous state, where
c) permanently in parallel to steps 1 a) and 1 b) a complementary system safety check that is controlling the state in the supervision area is performed by counting, requesting and checking regular system activities.

22. System according to claim 21 **characterized in that** a third step is optionally initiated after the second step, grouping sub-matrices to regions followed by classification of regions and subsequent verification of classification to identify the object class of each region and identify disturbances followed by optional pre-decision on objects criticality.

23. System of one of the claims 21 or 22, **characterized in that** more than one camera mounted in equidistance are used.

24. Use of a method of one of the claims 1 to 21 for the surveillance of danger zones.

25. Use of claim 24, **characterized in that** an alarm signal is generated when a critical situation is detected and/or the operation of a technical object is interrupted.

26. Computer program product, that is stored in a medium that is computer readable and comprises computer readable media, by which a computer is caused to conduct a method according to one of the preceding claims 1 to 20, while the computer programme is runing.

## Patentansprüche

1. Verfahren zur Überwachung von Gefahrenzonen unter Verwendung wenigstens einer Videokamera, um Bilder von einem Überwachungsbereich einzufangen, der einen Bahnsteig und ein Gleis in einem Bahnhof umfasst, wobei die Bilder an einer Schnittstelle zur Verarbeitung bereitgestellt werden, **gekennzeichnet durch** die Verwendung einer geometrischen Teilung des Überwachungsbereichs in Trapezoide, die sich jeweils in eine seitliche Dimension über den gesamten Gleisbereich und in der Länge in Richtung der Schienen erstrecken, und **durch** die Unterteilung eines jeden Trapezoids in ungefähr flächensymmetrische linke und rechte Trapezoidteile, wobei einer der Trapezoidteile den tatsächlichen Erfassungs- oder Überwachungssektor darstellt und der andere Trapezoidteil ein Bewertungstrapezoid darstellt, um nicht plausible Beleuchtung oder Objekte oder normale und zulässige Objekte zu bewerten, umfassend die folgenden Verfahrensschritte:
a) einen Vorverarbeitungsschritt, der die Bereitschaft des Systems für eine mögliche Störung auslöst, indem **durch** Teilen des Trapezoids im Überwachungsbereich in Submatrizes nur diejenigen Teile des Bilds beibehalten werden, die ihre optischen Kenngrößen verändern, wobei Bewegung in den Submatrizes mittels Differenzbildverarbeitung in Abhängigkeit von der betreffenden Erfassungsschwelle erfasst wird, und falls eine Bewegung in wenigstens einer kritischen Anzahl aktivierter Submatrizes innerhalb eines Überwachungstrapezoidteils in Abhängigkeit einer anderen Erfassungsschwelle erfasst wird, der Kontext kritischer Zustände im entsprechenden Überwachungstrapezoidteil bestimmt wird **durch** Vergleichen der Anzahl aktivierter Submatrizes in den jeweiligen linken und rechten Trapezoidteilen, nämlich den Überwachungs- und Bewertungstrapezoidteilen, gefolgt von
b) einem Analysenschritt, bei dem die identifizierten aktiven Überwachungstrapezoidteile mit früheren Aktivitäten im jeweiligen Trapezoidteil logisch kombiniert werden, um einen Gefahrenstatus zu identifizieren, wobei
c) parallel zu den Schritten 1a) und 1b) ständig eine ergänzende System-Sicherheitsüberprüfung durchgeführt wird, die **durch** Zählen, Abrufen und Überprüfen der normalen Systemaktivitäten den Status im Überwachungsbereich kontrolliert.

2. Verfahren nach Anspruch 1, **dadurch gekennzeichnet, dass** nach Schritt 1b) ein Analysenschritt durchgeführt wird, bei dem aktive Submatrizes zu Regionen gruppiert werden, gefolgt von Klassifizierung und Verifizierung der Regionen und gegebenenfalls einer Vorentscheidung zum kritischen Status von Objekten.

3. Verfahren nach einem der Ansprüche 1 oder 2, **dadurch gekennzeichnet, dass** bei Schritt 1a) die Bewegung in den Submatrizes mit Hilfe eines Differenzbilds, eines Hintergrundbezugsbilds oder einer Kombination derselben erfasst wird, wobei im Anschluss an eine Differenzbildanalyse eine Überprüfung des Hintergrundbezugsbilds erfolgt.

4. Verfahren nach einem der vorstehenden Ansprüche, **dadurch gekennzeichnet, dass** bei Schritt 1a) ein Differenzbild durch Subtrahieren der akkumulierten Grauwerte bestimmter Bildbereiche zu den Zeitpunkten T₀ und T₀ + Δt erzeugt wird und die mittleren Grauwerte der Submatrizes vor und nach der Grauwert-Differenzierung berechnet und subtrahiert werden.

5. Verfahren nach Anspruch 4, **dadurch gekennzeichnet, dass** Δt eine Zeit von maximal 100 ms ist.

6. Verfahren nach einem der vorstehenden Ansprüche, **dadurch gekennzeichnet, dass** bei der System-Sicherheitsüberprüfung in Schritt 1c) der Unterschied zu einem Hintergrundbezugsbild BRI, das regelmäßig aktualisiert werden muss, bei jedem Bild regelmäßig bestimmt wird, um auf einen Zug-im-Bahnhof-Status TAS hin zu überprüfen.

7. Verfahren nach Anspruch 6, **dadurch gekennzeichnet, dass** zwischen zwei aufeinanderfolgendem BRIs kleinere Grauwert-Gesamtänderungen ohne jegliche aktivierte Submatrix als nicht kritisch akzeptiert werden.

8. Verfahren nach einem der Ansprüche 3 bis 7, **dadurch gekennzeichnet, dass** bei Schritt 1a) ein Bezugsbild unter Verwendung des letzten Bilds ohne Störung erzeugt wird.

9. Verfahren nach Anspruch 8, **dadurch gekennzeichnet, dass** bei Schritt 1a) das letzte Bild ohne Störung mit bis zu vier folgenden Bildern verglichen wird.

10. Verfahren nach einem der vorstehenden Ansprüche, **dadurch gekennzeichnet, dass** bei Schritt 1a) Submatrizes, die ihre optischen Kenngrößen verändern, im Verlauf der Zeit bestimmt werden, um aktive Submatrizes zu definieren.

11. Verfahren nach einem der vorstehenden Ansprüche, **dadurch gekennzeichnet, dass** bei Schritt 1a) die aktiven Submatrizes in einem Merkmalbild analysiert werden.

12. Verfahren nach einem der vorstehenden Ansprüche, **dadurch gekennzeichnet, dass** bei Schritt 1a) jede Submatrix mit einem vordefinierten Schwellenwert verglichen wird, um eine Entscheidung bezüglich der Aktivierung der Submatrix zu treffen.

13. Verfahren nach einem der vorstehenden Ansprüche, **dadurch gekennzeichnet, dass** bei Schritt 1a) der logische Zusammenhang aktiver Submatrizes im Überwachungsbereich analysiert wird.

14. Verfahren nach einem der vorstehenden Ansprüche, **dadurch gekennzeichnet, dass** ein Entscheidungsschritt auf Schritt 1c) erfolgt, wobei im Falle einer kritischen Situation ein Signal generiert wird.

15. Verfahren nach einem der vorstehenden Ansprüche, **dadurch gekennzeichnet, dass** zusätzliche Warnsektoren als zusätzliche Trapezoidfläche an der Bahnsteigkante entlang vorgesehen sind.

16. Verfahren nach einem der vorstehenden Ansprüche, **dadurch gekennzeichnet, dass** bei Verwendung von mehr als einer Kamera die Kameras in gleichen Abständen am Bahnsteig entlang angeordnet sind.

17. Verfahren nach einem der vorstehenden Ansprüche, **dadurch gekennzeichnet, dass** die Erfassungsschwelle kontinuierlich skalierbar ist.

18. Verfahren nach einem der vorstehenden Ansprüche, **dadurch gekennzeichnet, dass** eine Submatrix N x N Pixel umfasst.

19. Verfahren nach Anspruch 18, **dadurch gekennzeichnet, dass** N wenigstens den Wert 5, vorzugsweise 7 aufweist.

20. Verfahren nach einem der vorstehenden Ansprüche, **dadurch gekennzeichnet, dass** zum Generieren eines Alarmsignals eine definierte Zahl n von Submatrizes aus einer m Submatrizes umfassenden Gruppe aktiviert sein muss.

21. System zur Überwachung von Gefahrenzonen unter Verwendung wenigstens einer Videokamera, um Bilder von einem Überwachungsbereich einzufangen, der einen Bahnsteig und ein Gleis in einem Bahnhof umfasst, wobei die Bilder an einer Schnittstelle zur Verarbeitung bereitgestellt werden, **gekennzeichnet durch** die Verwendung einer geometrischen Teilung des Überwachungsbereichs in Trapezoide, die sich jeweils in eine seitliche Dimension über den gesamten Gleisbereich und in der Länge in Richtung der Schienen erstrecken, und **durch** die Unterteilung eines jeden Trapezoids in ungefähr flächensymmetrische linke und rechte Trapezoidteile, wobei einer der Trapezoidteile den tatsächlichen Erfassungs- oder Überwachungssektor darstellt und der andere Trapezoidteil ein Bewertungstrapezoid darstellt, um nicht plausible Beleuchtung oder Objekte oder normale und zulässige Objekte zu bewerten, umfassend Hilfsmittel zur Durchführung
a) eines Vorverarbeitungsschritts, der die Bereitschaft des Systems für eine mögliche Störung auslöst, indem **durch** Teilen des Trapezoids im Überwachungsbereich in Submatrizes nur diejenigen Teile des Bilds beibehalten werden, die ihre optischen Kenngrößen verändern, wobei Bewegung in den Submatrizes mittels Differenzbildverarbeitung in Abhängigkeit von der betreffenden Erfassungsschwelle erfasst wird, und falls eine Bewegung in wenigstens einer kritischen Anzahl aktivierter Submatrizes innerhalb eines Überwachungstrapezoidteils in Abhängigkeit einer anderen Erfassungsschwelle erfasst wird, der Kontext kritischer Zustände im entsprechenden Überwachungstrapezoidteil bestimmt wird **durch** Vergleichen der Anzahl aktivierter Submatrizes in den jeweiligen linken und rechten Trapezoidteilen, nämlich den Überwachungs- und Bewertungstrapezoidteilen, gefolgt von
b) einem Analysenschritt, bei dem die identifizierten aktiven Überwachungstrapezoidteile mit früheren Aktivitäten im jeweiligen Trapezoidteil logisch kombiniert werden, um einen Gefahrenstatus zu identifizieren, wobei
c) parallel zu den Schritten 1a) und 1b) ständig eine ergänzende System-Sicherheitsüberprüfung durchgeführt wird, die **durch** Zählen, Abrufen und Überprüfen der normalen Systemaktivitäten den Status im Überwachungsbereich kontrolliert.

22. System nach Anspruch 21, **dadurch gekennzeichnet, dass** nach dem zweiten Schritt gegebenenfalls ein dritter Schritt eingeleitet wird, wobei die Submatrizes zu Regionen gruppiert werden, gefolgt von Klassifizierung der Regionen und anschließender Verifizierung der Klassifizierung, um die Objektklasse der jeweiligen Region zu identifizieren und Störungen zu identifizieren, gegebenenfalls gefolgt von einer Vorentscheidung bezüglich des kritischen Status von Objekten.

23. System nach einem der Ansprüche 21 oder 22, **dadurch gekennzeichnet, dass** mehr als eine Kamera verwendet wird und diese in gleichen Abständen angeordnet sind.

24. Verwendung eines Verfahrens nach einem der Ansprüche 1 bis 21 zur Überwachung von Gefahrenzonen.

25. Verwendung nach Anspruch 24, **dadurch gekennzeichnet, dass** ein AlarmSignal generiert wird, wenn eine kritische Situation erfasst wird, und/oder der Betrieb eines technischen Objekts unterbrochen wird.

26. Computerprogramm-Produkt, das in einem Medium gespeichert wird, das computerlesbar ist und computerlesbare Medien umfasst, wodurch ein Computer dazu gebracht wird, ein Verfahren nach einem der vorstehenden Ansprüche 1 bis 20 durchzuführen, während das Computerprogramm läuft.

## Revendications

1. Procédé pour surveiller des zones de danger en utilisant au moins une caméra vidéo pour recueillir des images d'une zone de surveillance comprenant un quai et une voie dans une gare, dans lequel les images sont fournies à une interface de traitement, **caractérisé par** l'utilisation d'une division géométrique de la zone de surveillance en trapèzes, chacun s'étendant dans une dimension latérale sur la surface de la voie complète et longitudinalement dans le sens des rails et par la subdivision de chaque trapèze en des parties de trapèze gauche et droite de la zone approximativement symétriques, dans laquelle l'une des parties de trapèze représente la zone de détection ou de surveillance réelle et l'autre partie du trapèze représente un trapèze de qualification pour qualifier des illuminations ou des objets comme peu plausibles ou des objets comme étant véritables et acceptables, et comprenant les étapes procédurales suivantes :
a) une étape de pré-traitement déclenchant l'attention du système sur une possible intrusion en retenant uniquement les parties de l'image qui changent leurs caractéristiques optiques, en divisant les trapèzes dans la zone de surveillance en sous-matrices, dans laquelle le mouvement dans les sous-matrices est détecté par traitement d'image différentielle en fonction du seuil de détection considéré, et dans le cas où un mouvement est détecté dans au moins un nombre critique de sous-matrices activées dans une partie de trapèze de surveillance, en fonction d'un autre seuil de détection, la situation de criticalité dans la partie de trapèze de surveillance est déterminée en comparant le nombre de sous-matrices activées dans les parties respectives de trapèze gauches et droites, c'est-à-dire les parties de trapèze de surveillance et de qualification, suivie par
b) une étape d'analyse, dans laquelle les parties de trapèze de surveillance identifiées comme actives sont combinées logiquement avec des activités historiques dans la partie respective du trapèze pour identifier une situation dangereuse, au cours desquelles
c) parallèlement aux étapes 1 a) et 1 b), une vérification de sécurité du système complémentaire est effectuée de façon permanente pour contrôler la situation dans la zone de surveillance en comptant, faisant des requêtes et vérifiant les activités normales du système.

2. Procédé selon la revendication 1, **caractérisé en ce qu'**après l'étape 1 b), une étape d'analyse est réalisée, dans laquelle des sous-matrices actives sont groupée en régions, suivie d'une classification et d'une vérification des régions et d'une pré-décision facultative sur la criticalité des objets.

3. Procédé selon la revendication 1 ou 2, **caractérisé en ce que** dans l'étape 1 a), un mouvement dans les sous-matrices est détecté par une image différentielle, une image de référence d'antécédent ou une combinaison d'entre elles, dans lequel une analyse d'image différentielle est suivie d'un contrôle d'image de référence d'antécédent.

4. Procédé selon l'une des revendications précédentes, **caractérisé en ce que** dans l'étape 1 a), une image différentielle est produite en soustrayant les valeurs de gris de certaines zones d'image à des instants T₀ et T₀ + Δt et que les valeurs de gris moyennes des sous-matrices avant et après la différenciation de valeur de gris sont calculées et soustraites.

5. Procédé selon la revendication 4, **caractérisé en ce que** Δt a une durée maximale de 100 ms.

6. Procédé selon l'une des revendications précédentes, **caractérisé en ce que** dans la vérification de sécurité du système dans l'étape 1 c), la différence entre une image de référence d'antécédent BRI, qui doit être régulièrement actualisée, avec chaque image est déterminée régulièrement pour repérer un train à l'état de stationnement en gare, TAS.

7. Procédé selon la revendication 6, **caractérisé en ce qu'**entre deux BRI consécutives, des petites variations de valeur de gris globale sans avoir de sous-matrice activée sont considérées comme non critiques.

8. Procédé selon l'une des revendications 3 à 7, **caractérisé en ce que** dans l'étape 1 a), une image de référence est produite en utilisant la dernière image sans intrusion.

9. Procédé selon la revendication 8, **caractérisé en ce que** dans l'étape 1 a), la dernière image sans intrusion est comparée avec jusqu'à quatre images suivantes.

10. Procédé selon l'une quelconque des revendications précédentes, **caractérisé en ce que** dans l'étape 1 a), des sous-matrices modifiant leurs caractéristiques optiques sont déterminées au cours du temps pour définir des sous-matrices actives.

11. Procédé selon l'une quelconque des revendications précédentes, **caractérisé en ce que** dans l'étape 1 a), des sous-matrices actives sont analysées dans une image caractéristique.

12. Procédé selon l'une quelconque des revendications précédentes, **caractérisé en ce que** dans l'étape 1 a), chaque sous-matrice est comparée avec un seuil prédéfini pour décider au sujet de l'activation de la sous-matrice.

13. Procédé selon l'une quelconque des revendications précédentes, **caractérisé en ce que** dans l'étape 1 a), le contexte logique des sous-matrices actives dans la zone de surveillance est analysé.

14. Procédé selon l'une quelconque des revendications précédentes, **caractérisé en ce qu'**une étape de décision suit l'étape 1 c), dans laquelle en cas de situation critique, un signal est généré.

15. Procédé selon l'une quelconque des revendications précédentes, **caractérisé en ce que** des zones d'avertissement complémentaires le long du bord du quai sont ajoutées sous forme de surface de trapèze complémentaire.

16. Procédé selon l'une quelconque des revendications précédentes, **caractérisé en ce qu'**en cas d'utilisation de plus d'une caméra, les caméras sont disposées à une distance égale le long du quai.

17. Procédé selon l'une quelconque des revendications précédentes, **caractérisé en ce que** le seuil de détection est continuellement évolutif.

18. Procédé selon l'une quelconque des revendications précédentes, **caractérisé en ce qu'**une sous-matrice comprend des pixels N par N.

19. Procédé selon l'une quelconque des revendications précédentes, **caractérisé en ce que** N a au moins la valeur 5, de préférence 7.

20. Procédé selon la revendication 8, **caractérisé en ce que**, pour générer un signal d'alarme, un nombre défini n de sous-matrices en dehors d'un groupe comprenant m sous-matrices doit être déclenché.

21. Système pour surveiller des zones de danger en utilisant au moins une caméra vidéo pour recueillir des images d'une zone de surveillance comprenant un quai et une voie dans une gare, dans lequel les images sont fournies à une interface de traitement, **caractérisé par** l'utilisation d'une division géométrique de la zone de surveillance en trapèzes, chacun s'étendant dans une dimension latérale sur la zone de la voie complète et dans longitudinalement dans le sens des rails et par la subdivision de chaque trapèze en des parties de trapèze gauche et droite de la surface approximativement symétriques, dans laquelle l'une des parties de trapèze représente la zone de détection ou de surveillance réelle et l'autre partie du trapèze représente un trapèze de qualification pour qualifier des illuminations ou des objets comme peu plausibles ou des objets comme étant véritables et acceptables, comprenant des moyens pour réaliser :
a) une étape de pré-traitement déclenchant l'attention du système sur une possible intrusion en retenant uniquement les parties de l'image qui modifient leurs caractéristiques optiques, en divisant les trapèzes dans la zone de surveillance en sous-matrices, dans laquelle le mouvement dans les sous-matrices est détecté par traitement d'image différentielle en fonction du seuil de détection considéré, et dans le cas où un mouvement est détecté dans au moins un nombre critique de sous-matrices activées dans une partie de trapèze de surveillance, en fonction d'un autre seuil de détection, la situation de criticalité dans la partie de trapèze de surveillance est déterminée en comparant le nombre de sous-matrices activées dans les parties respectives de trapèze gauches et droites, c'est-à-dire les parties de trapèze de surveillance et de qualification, suivie par
b) une étape d'analyse, dans laquelle les parties de trapèze de surveillance identifiées comme actives sont combinées logiquement avec des activités historiques dans la partie respective du trapèze pour identifier une situation dangereuse, au cours desquelles
c) parallèlement aux étapes 1 a) et 1 b), une vérification de sécurité du système complémentaire est effectuée de façon permanente pour contrôler la situation dans la zone de surveillance en comptant, faisant des requêtes et vérifiant les activités normales du système.

22. Système selon la revendication 21, **caractérisé en ce qu'**une troisième étape est facultativement initiée après la seconde étape, celle-ci regroupant des sous-matrices en régions, ce regroupement étant suivi par une classification des régions et une vérification ultérieure de la classification pour identifier la catégorie d'objet de chaque région et identifier les perturbations, suivie d'une pré-décision facultative sur la criticalité des objets.

23. Système selon l'une des revendications 21 ou 22, **caractérisé en ce qu'**on utilise plus d'une caméra montées à une distance égale.

24. Utilisation d'un procédé selon l'une des revendications 1 à 21 pour la surveillance de zones de danger.

25. Utilisation selon la revendication 24, **caractérisée en ce qu'**un signal d'alarme est produit dans le cas où une situation critique est détectée et/ou le fonctionnement d'un objet technique est interrompu.

26. Produit de programme informatique, qui est stocké dans un milieu qui est lisible par un ordinateur et comprend des milieux lisibles par un ordinateur, par lequel un ordinateur est amené à diriger un procédé selon l'une quelconque des revendications précédentes 1 à 20, en exécutant le programme informatique.
